# EUROPEAN PATENT SPECIFICATION

(11) **EP 0 914 381 B1**
(45) Date of publication and mention of the grant of the patent: **21.11.2001**
(21) Application number: 97930897.0
(22) Date of filing: 21.07.1997
(51) Int. Cl.: C08L 89/04

(54) **METHOD FOR MANUFACTURING A BIODEGRADABLE THERMOPLASTIC MATERIAL**
VERFAHREN ZUR HERSTELLUNG EINES BIOLOGISCH ABBAUBAREN UND THERMOPLASTISCHEN MATERIALS
PROCEDE DE FABRICATION D'UN MATERIAU THERMOPLASTIQUE BIODEGRADABLE

(30) Priority: 22.07.1996 NL 1003655
(43) Date of publication of application: 12.05.1999
(73) Proprietor: Pluimvee Kombinatie Nederland Plukon B.V., 9091 AZ Weesp (NL)
(72) Inventor: VAN INGEN, Gijsbert, Adriaan, NL-3435 AB Nieuwegein (NL); FABER, Tetman, Aljen, NL-3844 KJ Harderwijk (NL); OBDAM, Jacob, NL-8291 XZ Wapenveld (NL); KOLSTER, Peter, NL-6721 RV Bennekom (NL)
(74) Representative: Ottevangers, Sietse Ulbe
(86) International application number: NL9700433
(87) International publication number: WO9803591

(56) References cited:
- DD-A- 85 184
- DE-A- 4 126 756
- US-A- 4 163 804
- Römpp Chemie Lexicon, 9. Auflage, 1990, pages 1742-1744 and 2195-2196

## Description

The invention relates to a method for manufacturing a biodegradable thermoplastic material in which a solid keratin-containing natural product is used as the starting material.

Keratin is a protein contained in different animal materials. Examples of keratin-containing animal materials are feathers, hair, wool, nails, claws, hooves, horns and beaks. Such materials usually form waste streams from slaughterhouses, tanneries and other meat-processing industries.

In the past researches were directed towards finding useful applications for these voluminous waste streams.

U.S. patent 3,684,522 describes a method for preparing from keratin-containing material a fibrous protein product which is used in foods to give them a meat-like texture. According to this method keratin is first isolated. For this purpose keratin-containing animal materials are extracted with an aqueous solution of an alkali metal sulfide. After separation of the undissolved constituents the keratin-containing solution is treated with alkali metal sulfite and the keratin is precipitated by the addition of acid. The isolated and purified keratin is then mixed with water or a water-alcohol mixture and heating takes place to obtain an extrudable mass which is processed by an extrusion and an elongation treatment into the contemplated fibrous protein product.

Dutch patent application 7712209 describes a method for preparing a digestible product from keratin-containing materials. According to this method keratin-containing materials, such as poultry feathers, are subjected at high temperature and pressure in water to the action of high shearing forces. Thus an incoherent product is obtained which after drying gives a fine meal which is used for livestock feeding.

German Offenlegungsschrift 38 04 895 discloses a method for plasticizing or liquefying feathers or feather waste by means of a boiling extruder in order to obtain a material suitable for making animal feed.

Hungarian patent publication 36,152 discloses a method for partially hydrolyzing a keratin-containing natural product without breaking the skeleton bonds. The hydrolysis is then discontinued and the resulting intermediary product is reacted with an aliphatic or heterocyclic aldehyde having 1-6 carbon atoms. The thus obtained product can be processed by methods current in the plastics industry into articles of any desired shape.

According to the invention waste streams of keratin-containing materials are readily processed into a thermoplastic material suitable for numerous further applications.

Of essential importance is that the keratin-containing materials are processed without separating the keratin. The natural product is therefore processed as such.

Furthermore, only a very limited number of steps need to be carried out, while, moreover, no expensive auxiliary substances are required.

Finally, when carrying out the present method, no or practically no by-products are obtained which would have to be reprocessed.

The invention therefore provides a simple and efficient method for making a useful product from waste material.

The above objects are attained according to the invention by plasticizing a solid keratin-containing natural product without separation of the keratin, in the presence of a medium forming a liquid phase under the selected processing conditions, at a temperature of 20-100°C and elevated pressure under the action of shearing forces, and recovering the thereby obtained thermoplastic material, wherein the solid keratin-containing natural material is formed by feathers, hair, wool nails, claws, hooves, horns and/or beaks, and wherein the liquid phase is formed by water so that the effective water content is 10-80 wt.%, and which liquid phase also contains an auxiliary substance for breaking sulfur bridges in the keratin or for shortening the chain length of the keratin molecules. The above objects are likewise attained by plasticizing a solid keratin-containing natural product without separation of the keratin, in the presence of a medium forming a liquid phase under the selected processing conditions, at a temperature of 120-150°C and elevated pressure under the action of shearing forces, and recovering the thereby obtained thermoplastic material, wherein the solid keratin-containing natural material is formed by feathers, hair, wool nails, claws, hooves, horns and/or beaks, and wherein the liquid phase is formed by water so that the effective water content is 10-80 wt.%, wherein the liquid phase is formed by one or more substances which promote plasticization and are liquid under the processing conditions in which plasticization is carried out, and wherein the effective water content is at most 60 wt.%.

The starting material used in the present method may be any solid keratin-containing natural product, usually of animal origin, such as, for instance, (down) feathers, hair, wool, nails, claws, hooves, horns and beaks. Preferably, poultry feathers are used as the starting material.

The solid keratin-containing natural product is processed according to the invention without separation of the keratin. In the natural product keratin molecules and other molecules form a specific material-characteristic structure or basic skeleton structure. This material-characteristic structure is essentially retained in the present starting material and is absolutely not destroyed by a chemical reaction or a separation treatment, such as extraction.

Usually, a pretreatment is carried out in order to remove appending meat and dirt residues and optionally skin fat. In fact, these materials to be removed do not form part of the solid keratin-containing natural product, so they do not form part of its material-characteristic structure either, but adhere to, e.g., the surface. Such a pretreatment may comprise a washing treatment, but other conventional pretreatments are also possible, provided they do not essentially change the material-characteristic structure.

Furthermore, the solid keratin-containing natural product can be comminuted by a mechanical treatment, such as by chopping, grinding etc. Such a comminuting treatment leaves the material-characteristic structure essentially unchanged and mainly serves to better adjust the size of the starting material to the apparatus used for further processing.

The optionally washed and comminuted starting material is processed according to the invention into a thermoplastic material in the presence of a medium forming a liquid phase under the conditions of processing. This liquid phase ensures that during plasticization a good heat transfer occurs and the starting material melts so that a thermoplastic material with a firm packing is obtained.

According to a first variant of the invention the medium is essentially formed by water. This water may originate from the above-mentioned washing treatment or from a, mostly automatically performed, treatment in which the keratin-containing natural product is removed from the animal from which it originates, e.g. an automatic plucking treatment. If necessary, water may also be added to the starting material.

If water functions as a medium for forming the liquid phase, this must be present in an effective amount (= effective water content) of 10-80 wt.%, preferably above 35 wt.%, and most preferably of 40-60 wt.%, based on the amount of solid keratin-containing natural product.

As used herein, the effective amount of water is the amount of water freely available when carrying out plasticization. A part of this water may then originate from the natural product itself, in which it is present as, e.g., crystal water given off during plasticization.

When the keratin-containing natural product is supplied with a larger amount of water than the desired effective amount, the excess of water is evaporated or withdrawn before the starting material reaches the starting zone of plasticization. For this purpose a drying treatment can be carried out or a water discharge filter can be used, but other known techniques for withdrawing water from a solid product may also be used.

Another method of lowering the effective water content of the starting material comprises the addition of a suitable amount of a water-binding agent to the solid keratin-containing natural product before this is processed. Water-binding agents actually withdraw water and retain it so that the effective or freely available amount of water is smaller. As suitable water-binding agents, e.g., specific starch products or proteins may be mentioned. When using water-binding agents, their possible effect on the mechanical properties of the thermoplastic material to be manufactured must also be considered. An excessive amount of water-binding agents can actually damage the strength and the water resistance. For this reason water-binding agents are generally not used in amounts above 10 wt.%, based on the solid keratin-containing natural product.

When using water as medium for forming the liquid phase, the liquid phase also contains an auxiliary substance for breaking sulfur bridges in the keratin or for shortening the chain length of the keratin molecules.

Eligible as auxiliary substances suitable for breaking sulfur bridges in the keratin are especially substances having a reducing effect. Such substances have the important drawback that they only break the sulfur bridges present in keratin, without attacking the keratin molecules themselves and disintegrating them into shorter pieces. Thus a limited disintegration of the material can be achieved, which results in a final product having excellent mechanical properties.

As examples of suitable substances having a reducing effect, alkali metal sulfides and especially sodium sulfide may be mentioned. Suitable amounts of these substances range between 0.5 and 10 wt.%, preferably between 0.7 and 1.5 wt.%, based on the solid keratin-containing natural product.

As auxiliary substances for shortening the chain length of the keratin molecules, both strongly alkaline inorganic substances and strong inorganic acids may be used. Examples of suitable, strongly alkaline inorganic substances are alkali metal hydroxides and alkaline earth metal hydroxides. Preferably, sodium hydroxide is used. Strongly alkaline inorganic substances are normally used in amounts between 0.2 and 10 wt.%, preferably between 2 and 4 wt.%, based on the solid keratin-containing natural product. As strong inorganic acid, any strong inorganic acid, such as hydrochloric acid, sulfuric acid, phosphoric acid, or a mixture of such acids can be used, but preferably sulfuric acid is used. Strong inorganic acids are normally used in amounts of 0.5-10 wt.%, preferably of 2-4 wt.%, based on the solid keratin-containing natural product.

When using strongly alkaline inorganic substances or strong inorganic acids as auxiliary substances, care must be exercised because the activity of these classes as auxiliary substances is based on shortening the chain length of the keratin molecules. Accordingly, the amount of these auxiliary substances is so chosen as to effect a chain shortening which is adequate for a proper plasticization of the starting material, but does not lead to such short chains that the final product would no longer possess the desired properties. Which amount is most suitable in a specific case can be easily determined by way of experiment by a person skilled in the art.

According to a second variant of the invention the liquid phase is substantially formed by one or more substances which are also liquid under the selected processing conditions and, moreover, promote plasticization. The auxiliary substances essential in the earlier discussed first variant are not necessary now.

The above substances which are liquid under the selected processing conditions may be selected from numerous substances which are known to have a plasticizing effect in a hot melt, and which, moreover, have a boiling point above that of water and preferably of at least 120°C, most preferably even at least 140°C. Preferably, these substances are selected from classes of compounds which have a partly polar and a partly non-polar character. As examples of such classes, polyols, polyalkylene glycols, polyether glycols, fatty acids, fatty acid esters and urea compounds, including urea itself, are mentioned. Suitable specific compounds are, for instance, glycerol, palmitic acid, stearic acid and tallow. Most preferably. glycerol is used. The above substances may also be selected from classes of compounds having an only non-polar character, such as higher alkanes. Of course, mixtures may also be used. Although, especially when using a rather large amount of these substances, phase separation may occur in the final thermoplastic material, it is to be noted that this has no disadvantageous effect on the favorable properties and the further processing of the manufactured thermoplastic material. These substances are normally used in an amount of 10-200 wt.%, preferably of 20-80 wt.%, based on the solid keratin-containing natural product.

According to this second variant, water may also be present, but this water is not capable per se to form the liquid phase. For this purpose, the above-described substances having a plasticizing effect are actually necessary. On the other hand, the water present can support and enhance the contemplated effect of these last substances. According to this second variant, the effective water content is at most 60 wt.%, preferably at most 40 wt.% and most preferably at most 20 wt.%, based on the solid keratin-containing natural product. In general, less water present is present according to this second variant than according to the earlier discussed first variant. In this case, too, the desired effective water content can be controlled by drying, withdrawing water before the starting zone of plasticization and/or by using water-binding agents.

As discussed above, a solid keratin-containing natural product is processed according to the invention into a biodegradable thermoplastic material, without separation of the keratin, in the presence of a medium forming a liquid phase under the selected processing conditions, into a biodegradable thermoplastic material. To the starting material there may also be added all types of conventional additives, such as coloring agents, e.g. titanium oxide or carbon, filling agents, e.g. talcum powder, or substances which influence the odor, e.g. activated carbon, which also acts as coloring agent, etc. Additives are usually added in small amounts and therefore have little or no influence on the further properties of the final product.

The solid keratin-containing natural product, the medium for forming the liquid phase and any further components, as far as necessary or desirable, may be easily combined or mixed to a more or less homogeneous mass. This mixing step can be carried out in any conventional mixing apparatus.

Sometimes it may be desirable to store the mixed mass for some time, e.g. to allow the employed auxiliary substances, according to the earlier discussed first variant, to act on the solid keratin-containing natural product. This action can be promoted by occasionally or continuously stirring the mass. The duration of this period can be easily determined by way of experiment by a person skilled in the art, in which connection particularly the desired degree of action of the auxiliary substances is decisive.

Plasticization is effected by subjecting the starting mass at elevated temperature and pressure to the action of shearing forces. The temperature at which plasticization is carried out must be high enough to melt the solid keratin-containing natural product under the selected processing conditions but must not be so high that an essential part of that product disintegrates. When, according to the above-discussed first variant, water is used as medium forming a liquid phase under the processing conditions, plasticization is carried out at a temperature between 20 and 100°C, preferably between 70 and 90°C. When, on the other hand, the method is carried out according to the above-discussed second variant and the liquid phase is formed by one or more substances which promote plasticization and are also liquid under the selected processing conditions, plasticization is carried out at a temperature between 120 and 150°C and preferably between 125 and 140°C.

The pressure at which plasticization is carried out may be within a wide range and is preferably selected between 10 and 150 bar, most preferably between 80 and 120 bar.

It is important that during the action of the shearing forces the heat transfer is so efficient that a complete or nearly complete melting occurs and a plastic mass having a firm packing is obtained. The action of shearing forces in which such an efficient heat transfer occurs can be effected by different known methods. Considering the nature of the mass to be plasticized, a person skilled in the art can easily determine by way of experiment which method is most suitable.

Preferably, an extruder is used for the action of shearing forces. According to a very efficient procedure, plasticization is carried out in an extruder as a one-step process. A suitable extruder is, e.g., of the co-rotating twin-screw type.

To promote heat transfer, there is preferably used an extruder the screw of which comprises several kneading elements. These kneading elements ensure, besides a proper heat transfer, also a proper dispersion of the solid keratin-containing natural product.

The extruder may comprise a provision, such as a water discharge filter, to withdraw water from the starting material before the starting zone of plasticization. Furthermore, the extruder can be degassed in a pressureless region in the screw by a vacuum pump, with the effective water content usually decreasing by about 5 wt.%, based on the solid keratin-containing natural product.

Different variations of the screw structure are possible, provided the temperature in the material to be processed is properly distributed in order to prevent so-called hot spots and a proper melting occurs. It is possible, for instance, to use an extruder with a "Reverse Screw Element" (RSE), if required with reflux orifices. This is especially interesting when the process according to the earlier discussed first variant is carried out because the employed concentration of the auxiliary substance may then be lower.

Furthermore, different dies may be placed in the extruder. By using a die with small orifices, a better screw filling, a higher pressure and a more easily dried and ground extrudate can be obtained. As long as the orifices do not become clogged and the pressure does not rise beyond the limit value, the size and number of orifices of a die can be varied to an unlimited extent. Even the connection of a foil die or a tube die is within the range of possibilities.

Besides the temperature and the pressure, the number of revolutions of the screws and the throughput are the most important variables during extrusion. The number of revolutions, also referred to as screw speed, usually ranges between 10 and 300 rpm and preferably between 25 and 50 rpm. High numbers of revolution usually result in a more rapid and more complete plasticization. On the other hand, a very high number of revolution can provide such an dissipation in the mass to be plasticized that there is a risk of disintegration of the solid keratin-containing natural product, which is of course undesirable.

The throughput may greatly vary. In the case of manual filling of the extruder with coarse or rather coarse starting material, the throughput is, for instance, a few kg/h. When the starting material, however, has been previously comminuted and the extruder is mechanically filled with, e.g., a plunger, throughputs of more than 100 kg/h are obtainable. A higher throughput means a shorter residence time of the material in the extruder and thus a higher production capacity.

The product obtained by plasticization is a molten thermoplastic material having a firm internal cohesion or packing. This product can be processed in the conventional manner, e.g. by granulating or grinding, into a manageable semimanufacture.

The thermoplastic material obtained by the present method can be processed by known per se techniques, e.g. by pressing or injection molding, into a wide range of articles, e.g. packaging materials and consumer articles diverse in nature, such as boxes, pots, beakers, foil, plates, rods and nameplates.

The thus manufactured articles have good strength properties and are moreover water-resistant. They are particularly rather firm and also retain this firmness when in contact with water. Yet they are properly biodegradable when exposed, e.g. in a suitable environment, to the action of naturally occurring microorganisms. As is known, this offers great advantages if the articles, after having performed their function, must be processed as waste.

The invention will be illustrated by the following examples. These examples are considered to limit the invention in no way at all.

Unless otherwise stated, all the percentages mentioned in the examples are weight percentages, based on the solid keratin-containing natural product.

### Example I

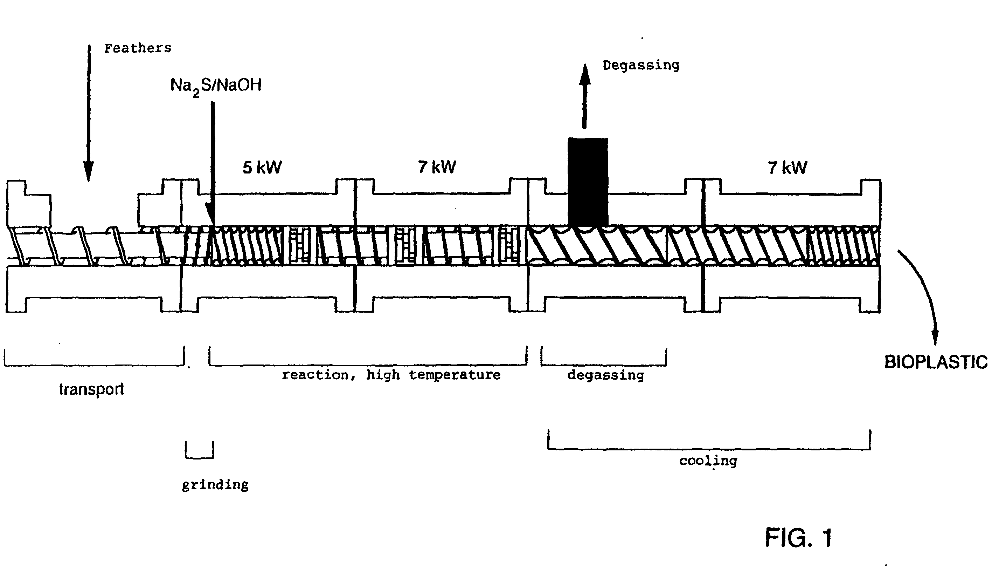

Washed chicken down feathers having a water content of 35% were fed dosewise in unground form into a BC 45 Clextral co-rotating twin-screw extruder having a length of 1250 mm and a length/diameter ratio of 23. The screw structure is shown in Fig. 1. There was used a die with four orifices having a diameter of 2 mm. The die was cooled to 15°C in order to improve the manageability of the extrudate. A 10% sodium sulfide solution was supplied via a side inlet of the extruder. The flow rate of the sodium sulfide solution was adjusted with a controllable hose pump to 1.5-1.8 l/h. The number of revolutions of the screws was adjusted to 50 rpm. The temperature of the heating jackets in the reaction part of the extruder ranged between 80 and 90°C.

At a throughput of about 7.5 kg/h there was obtained a molten strand green in color. By examining the extrudate under an optical microscope, it could be confirmed that the melting had proceeded completely. The sodium sulfide concentration in the extrudate was 2.1-2.4%, while the water content ranged between 40 and 48%.

At the highest concentration of sodium sulfide (2.4%) the amperage during extrusion was 16 A, the motor output 0.85 kW and the pressure 19 bar. At the low concentration of sodium sulfide (2.1%) the amperage during extrusion was 23 A, the motor output 1.25 kW and the pressure 22 bar.

The water-resistant extrudate was ground to granulate and was found to be properly moldable in a press at 100 and 150°C.

### Example II

The process of Example I was repeated, but instead of sodium sulfide, sodium hydroxide was now used as auxiliary substance. To this end, caustic soda having a concentration of 5 mol/l was additionally fed dosewise via the side inlet of the extruder via a controllable hose pump having a flow rate of 1.2-2.2 l/h. The pressure during extrusion was 19 bar.

By varying the throughput under the above-described conditions between 10 and 18 kg/h, there were obtained four different extrudates which, when examined under an optical microscope, were found to be molten nearly completely. The extrudates contained a concentration of sodium hydroxide of 1.7%, 2.8%, 3.3% or 5.8%. The extrudate containing a concentration of sodium hydroxide of 2.8% was molten most completely.

The water content of the extrudates ranged between 49 and 62%. The amperage and the required motor output during extrusion was hardly influenced by the differences in processing conditions. The amperage was 16 A at the lowest sodium hydroxide concentration and 20 A at the highest sodium hydroxide concentration. The output ranged between 1.08 and 1.19 kW.

The water-resistant extrudates were light brown in color and were ground to granulate which was properly moldable in a press at 100 and 150°C.

### Example III

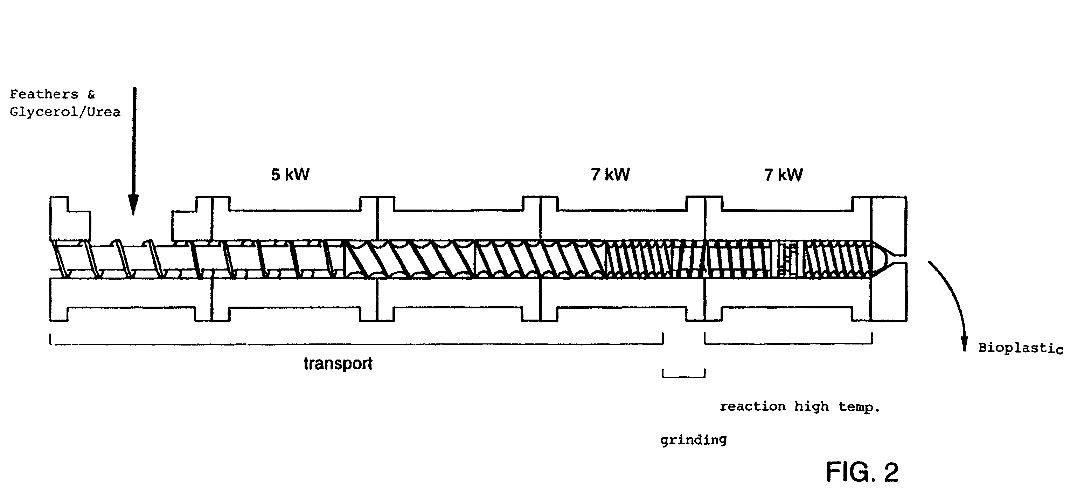

Washed chicken feathers having a water content of about 57% were dried in a Ledoux box drier for 60 minutes at 60°C. After drying the moisture content was about 13%. The feathers were fed dosewise in unground form into a BC 45 Clextral co-rotating twin-screw extruder having a length of 1250 mm and a length/diameter ratio of 23. The screw structure is shown in Fig. 2. There was used a mold with four orifices having a diameter of 4 mm. With a controllable hose pump, glycerol was introduced at the same place as where the feathers were fed dosewise. The concentration of glycerol in the extrudate was 25%. The number of revolutions of the screws was adjusted to 25 rpm. The throughput of the molten feather mass was on average 5 kg/h. The temperature of the extruder jackets was varied between 120 and 140°C. The pertinent pressure and the required amperage and motor output during extrusion are given in Table I.

**Table I**

| Temperature (°C) | Amperage (A) | Motor output (kW) | Pressure (bar) |
|---|---|---|---|
| 120 | 23 | 0.67 | 51 |
| 130 | 31 | 0.86 | 60 |
| 140 | 31 | 0.86 | 35 |

There were obtained completely molten extrudates which were suitable for further processing, such as by pressing or injection molding.

### Example IV

The process of Example III was repeated, but now with 50% glycerol in the extrudate, instead of 25%, and with numbers of revolutions of 25, 50 and 100 rpm. The temperature of the extruder jackets was adjusted to 130°C. The throughput was about 2.5 kg/h. The required amperage, the motor output and the pressure during extrusion are given in Table II.

**Table II**

| Number of revolutions (rpm) | Amperage (A) | Motor output (kW) | Pressure (bar) |
|---|---|---|---|
| 25 | 15 | 0.42 | 30 |
| 50 | 31 | 1.76 | 65 |
| 100 | 31 | 4.37 | 60 |

The resulting extrudates, when examined under an optical microscope, were found to be completely molten. The extrudate obtained by extrusion at a number of revolutions of 100 rpm was then injection molded at 180°C, thus forming rods. These rods had an elongation of 57% and a tensile strength of 2 MPa. The Young's modulus was 13 MPa.

### Example V

Chicken feathers having a length varying from a few centimeters to more than 10 cm and a water content of 57% were fed dosewise into a Clextral extruder having the screw structure of Fig. 2. The extruder had a jacket temperature of 80°C and a screw speed of 50 rpm. No die was used and no substances were added. There was obtained a mash of feather chips which was not molten at all and showed no cohesion. On the other hand, the material-characteristic structure of the chicken feathers was found to be retained in the chips.

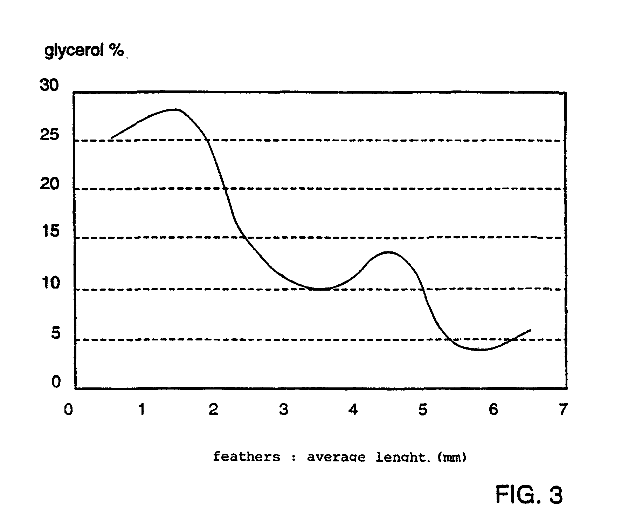

Of the feather chips, the particle size was determined by means of microscopic techniques. The result is shown in Fig. 3.

The resulting feather chips were dried in a Ledoux box drier for 45 minutes at 60°C up to a water cortent of 15%. Subsequently, they were fed dosewise again into the Clextral extruder, but now a die having four orifices of 4 mm was used. Via the inlet where the feathers were fed dosewise, glycerol was supplied with a controllable hose pump. The screw speed was adjusted to 25 rpm and the temperature of the jackets to 130°C. The throughput was about 5.6 kg/h.

The glycerol supply was so varied that extrudates were obtained having a glycerol concentration between 25% and 50%. Table III shows the effect of the glycerol concentration in the extrudate on the required amperage and motor output and the pressure during extrusion.

**Table III**

| Glycerol (%) | Amperage (A) | Motor output (kW) | Pressure (bar) |
|---|---|---|---|
| 25 | 30 | 0.84 | 86 |
| 36 | 36 | 1.06 | 73 |
| 44 | 35 | 0.98 | 60 |
| 50 | 30 | 0.84 | 65 |

There were obtained water-resistant strands which, when examined under the optical microscope, were found to be completely molten. At all the employed glycerol concentrations the resulting strand was found to be suitable for further processing, such as by pressing or injection molding.

### Example VI

Chicken feathers having a water content of 12% were fed dosewise with an automatic plunger feeder into a Clextral extruder having the screw structure as shown in Fig. 2. There was used a die having four orifices of 3 mm. The feeder was so adjusted that the plunger went down every 4 seconds and pressed the feathers into the extruder for 2 seconds. Urea crystals were additionally fed dosewise into the inlet of the extruder. The extruder was adjusted to a temperature of 130°C and a number of revolutions of 25 rpm. During extrusion the required amperage was 19 A, the motor output 0.54 kW and the pressure on the screw 55 bar. The throughput was about 4 kg/h.

The urea concentration in the extrudate was determined by means of a protein content measurement and was 11%. The resulting extrudate was completely molten, and was light brown in color and had a coarse structure. The product was found to be suitable for further processing, such as by pressing or injection molding.

### Example VII

Predried chicken feathers having a water content of 12% were fed dosewise by means of an automatic plunger into an extruder having a screw structure as shown in Fig.2, and provided with a die having four orifices of 3 mm. The plunger was so adjusted that it went down every 4 seconds and pressed the feathers into the extruder for 2 seconds. There was reached an average throughput of 4 kg/h. The extruder was adjusted to a temperature of 130°C and a screw speed of 25 rpm. Via a controllable hose pump, glycerol was dosed in different concentrations, together with different concentrations of titanium oxide and/or activated carbon. The concentrations of glycerol, titanium dioxide and activated carbon in the extrudates and the amperage, the motor output and the pressure during extrusion are given in Table IV.

**Table IV**

| Glycerol (%) | Titanium oxide (%) | Activated carbon (%) | Amperage (A) | Motor output (kW) | Pressure (bar) |
|---|---|---|---|---|---|
| 50 | 1 | - | 28 | 0.81 | 88 |
| 50 | 2.5 | - | 28 | 0.81 | 88 |
| 47 | 5 | - | 36 | 1.03 | 93 |
| 47 | - | 10 | 45 | 0.92 | 80 |

Both titanium oxide and activated carbon properly dispersed in the feather melt. The addition of titanium oxide gave an equally gray extrudate. The color became lighter according as more titanium oxide was used. The addition of activated carbon resulted in a deep black extrudate.

In all described cases there was obtained a completely molten extrudate which, after granulation, was suitable for further processing by pressing or injection molding.

## Claims

1. A method for manufacturing a biodegradable thermoplastic material, wherein a solid keratin-containing natural product is plasticized, without separation of the keratin, in the presence of a medium forming a liquid phase under the selected processing conditions, at a temperature of 20-100°C and elevated pressure under the action of shearing forces and the thereby obtained thermoplastic material is recovered, wherein the solid keratin-containing natural product is formed by feathers, hair, wool, nails, claws, hooves, horns and/or beaks, and wherein the liquid phase is formed by water so that the effective water content is 10-80 wt.%, and which liquid phase also contains an auxiliary substance for breaking sulfur bridges in the keratin or for shortening the chain length of the keratin molecules.

2. A method according to claim 1, wherein the effective water content is 40-60 wt.%.

3. A method according to claim 1 or 2, wherein plasticization is carried out at a temperature of 70-90°C.

4. A method according to claims 1-3, wherein an alkali metal sulfide is used as auxiliary substance for breaking sulfur bridges in the keratin.

5. A method according to claim 4, wherein the alkali metal sulfide is sodium sulfide.

6. A method according to claims 1-5, wherein the auxiliary substance for breaking sulfur bridges in the keratin is used in an amount of 0.5-10 wt.%, based on the solid keratin-containing natural product.

7. A method according to claims 1-3, wherein a strongly alkaline inorganic substance is used as auxiliary substance for shortening the chain length of the keratin molecules.

8. A method according to claim 7, wherein the strongly alkaline inorganic substance is used in an amount of 0.2-10 wt.%, based on the solid keratin-containing natural product.

9. A method according to claims 1-3, wherein a strong inorganic acid is used as auxiliary substance for shortening the chain length of the keratin molecules.

10. A method according to claim 9, wherein the strong inorganic acid is used in an amount of 0.5-10 wt.%, based on the solid keratin-containing natural product.

11. A method for manufacturing a biodegradable thermoplastic material, wherein a solid keratin-containing natural product is plasticized, without separation of the keratin, in the presence of a medium forming a liquid phase under the selected processing conditions, at a temperature of 120-150°C and elevated pressure under the action of shearing forces and the thereby obtained thermoplastic material is recovered, wherein the solid keratin-containing natural product is formed by feathers, hair, wool, nails, claws, hooves, horns and/or beaks, wherein the liquid phase is formed by one or more substances which promote plasticization and are liquid under the processing conditions in which plasticization is carried out, and wherein the effective water content is at most 60 wt.%

12. A method according to claim 11, wherein the effective water content is at most 20. wt.%.

13. A method according to claim 11 or 12, wherein the substance promoting plasticization is selected from polyols, polyalkylene glycols, polyether glycols, fatty acids, fatty acid esters and urea.

14. A method according to claim 13, wherein glycerol is used as the substance promoting plasticization.

15. A method according to claims 11-14, wherein the substance promoting plasticization is used in an amount of 10-200 wt.%, based on the solid keratin-containing natural product.

16. A method according to claim 15, wherein the substance promoting plasticization is used in an amount of 20-80 wt.%, based on the solid keratin-containing natural product.

17. A method according to claims 1-16, wherein the solid keratin-containing natural product is previously comminuted by a mechanical treatment.

18. A method according to claims 1-17, wherein the desired effective water content is at least partly obtained by drying, withdrawing water before the starting zone of plasticization and/or by using water-binding agents.

19. A method according to claims 1-18, wherein plastioization is carried out under a pressure of 10-150 bar.

20. A method according to claim 19, wherein plasticization is carried out under a pressure of 80-120 bar.

21. A method according to claims 1-20, wherein plasticization is carried out in an extruder as a one-step process.

22. A biodegradable, thermoplastic material obtainable by a method according to any of the preceding claims.

23. An article manufactured of a material according to claim 22.

## Patentansprüche

1. Verfahren zur Herstellung eines biologisch abbaubaren thermoplastischen Materials, wobei ein festes keratinhaltiges Naturprodukt ohne Abtrennung des Keratins in Gegenwart eines Mediums, das unter den gewählten Verarbeitungsbedingungen eine flüssige Phase bildet, bei einer Temperatur von 20-100°C und unter erhöhtem Druck unter der Einwirkung von Scherkräften weichgemacht wird und das dadurch erhaltene thermoplastische Material gewonnen wird, wobei das feste keratinhaltige Naturprodukt aus Federn, Haaren, Wolle, Nägeln, Klauen, Hufen, Hörnern und/oder Schnäbeln besteht und wobei die flüssige Phase aus Wasser besteht, so dass der effektive Wassergehalt 10-80 Gew.-% beträgt, wobei die flüssige Phase auch einen Hilfsstoff enthält, um die Schwefelbrücken im Keratin aufzubrechen oder um die Kettenlänge der Keratinmoleküle zu verkürzen.

2. Verfahren gemäß Anspruch 1, wobei der effektive Wassergehalt 40-60 Gew.-% beträgt.

3. Verfahren gemäß Anspruch 1 oder 2, wobei das Weichmachen bei einer Temperatur von 70-90 °C erfolgt.

4. Verfahren gemäß Anspruch 1 bis 3, wobei ein Alkalimetallsulfid als Hilfsstoff verwendet wird, um die Schwefelbrücken im Keratin aufzubrechen.

5. Verfahren gemäß Anspruch 4, wobei es sich bei dem Alkalimetallsulfid um Natriumsulfid handelt.

6. Verfahren gemäß Anspruch 1 bis 5, wobei der Hilfsstoff zum Aufbrechen der Schwefelbrücken im Keratin in einer Menge von 0,5-10 Gew.-% verwendet wird, bezogen auf das feste keratinhaltige Naturprodukt.

7. Verfahren gemäß Anspruch 1 bis 3, wobei eine stark alkalische anorganische Substanz als Hilfsstoff verwendet wird, um die Kettenlänge der Keratinmoleküle zu verkürzen.

8. Verfahren gemäß Anspruch 7, wobei die stark alkalische anorganische Substanz in einer Menge von 0,2-10 Gew.-% verwendet wird, bezogen auf das feste keratinhaltige Naturprodukt.

9. Verfahren gemäß Anspruch 1 bis 3, wobei eine starke anorganische Säure als Hilfsstoff verwendet wird, um die Kettenlänge der Keratinmoleküle zu verkürzen.

10. Verfahren gemäß Anspruch 9, wobei die starke anorganische Säure in einer Menge von 0,5-10 Gew.-% verwendet wird, bezogen auf das feste keratinhaltige Naturprodukt.

11. Verfahren zur Herstellung eines biologisch abbaubaren thermoplastischen Materials, wobei ein festes keratinhaltiges Naturprodukt ohne Abtrennung des Keratins in Gegenwart eines Mediums, das unter den gewählten Verarbeitungsbedingungen eine flüssige Phase bildet, bei einer Temperatur von 120-150°C und unter erhöhtem Druck unter der Einwirkung von Scherkräften weichgemacht wird und das dadurch erhaltene thermoplastische Material gewonnen wird, wobei das feste keratinhaltige Naturprodukt aus Federn, Haaren, Wolle, Nägeln, Klauen, Hufen, Hörnern und/oder Schnäbeln besteht, wobei die flüssige Phase aus einer oder mehreren Substanzen besteht, die das Weichmachen fördern und unter den Verarbeitungsbedingungen, bei denen das Weichmachen erfolgt, flüssig sind, wobei der effektive Wassergehalt höchstens 60 Gew.-% beträgt.

12. Verfahren gemäß Anspruch 11, wobei der effektive Wassergehalt höchstens 20 Gew.-% beträgt.

13. Verfahren gemäß Anspruch 11 oder 12, wobei die Substanz, die das Weichmachen fördert, aus Polyolen, Polyalkylenglycolen, Polyetherglycolen, Fettsäuren, Fettsäureestern und Harnstoff ausgewählt wird.

14. Verfahren gemäß Anspruch 13, wobei Glycerin als die Substanz verwendet wird, die das Weichmachen fördert.

15. Verfahren gemäß Anspruch 11 bis 14, wobei die Substanz, die das Weichmachen fördert, in einer Menge von 10-200 Gew.-% verwendet wird, bezogen auf das feste keratinhaltige Naturprodukt.

16. Verfahren gemäß Anspruch 15, wobei die Substanz, die das Weichmachen fördert, in einer Menge von 20-80 Gew.-% verwendet wird, bezogen auf das feste keratinhaltige Naturprodukt.

17. Verfahren gemäß Anspruch 1 bis 16, wobei das feste keratinhaltige Naturprodukt vorher durch eine mechanische Behandlung zerkleinert wird.

18. Verfahren gemäß Anspruch 1 bis 17, wobei der gewünschte effektive Wassergehalt wenigstens zum Teil durch Trocknen, Wasserentzug vor der Anfangszone des Weichmachens und/oder Verwendung wasserbindender Mittel erhalten wird.

19. Verfahren gemäß Anspruch 1 bis 18, wobei das Weichmachen unter einem Druck von 10-150 bar erfolgt.

20. Verfahren gemäß Anspruch 19, wobei das Weichmachen unter einem Druck von 80-120 bar erfolgt.

21. Verfahren gemäß Anspruch 1 bis 20, wobei das Weichmachen in einem Extruder als einstufiger Prozess erfolgt.

22. Biologisch abbaubares thermoplastisches Material, das nach einem Verfahren gemäß einem der vorstehenden Ansprüche erhältlich ist.

23. Artikel, der aus einem Material gemäß Anspruch 22 hergestellt ist.

## Revendications

1. Procédé de fabrication d'un matériau thermoplastique biodégradable, où un produit naturel solide contenant de la kératine est plastifié, sans séparation de la kératine, en présence d'un milieu formant une phase liquide dans les conditions de traitement choisies, à une température de 20-100°C et à pression élevée sous l'action de forces de cisaillement, et le matériau thermoplastique ainsi obtenu est récupéré, le produit naturel solide contenant de la kératine étant formé par des plumes, des poils, de la laine, des ongles, des griffes, des sabots, des cornes et/ou des becs, et la phase liquide étant constituée par de l'eau de sorte que la teneur en eau effective est de 10-80 % en masse, et laquelle phase liquide contient aussi une substance auxiliaire pour rompre les ponts soufre dans la kératine ou pour raccourcir la longueur de chaîne des molécules de kératine.

2. Procédé selon la revendication 1, où la teneur en eau effective est 40-60 % en masse.

3. Procédé selon la revendication 1 ou 2, où la plastification est réalisée à une température de 70-90°C.

4. Procédé selon les revendications 1-3 où un sulfure de métal alcalin est utilisé comme substance auxiliaire pour rompre les ponts soufre dans la kératine.

5. Procédé selon la revendication 4, où le sulfure de métal alcalin est le sulfure de sodium.

6. Procédé selon les revendications 1-5 où la substance auxiliaire pour rompre les ponts soufre dans la kératine est utilisée en une quantité de 0,5-10 % en masse par rapport au produit naturel solide contenant de la kératine.

7. Procédé selon les revendications 1-3 où une substance inorganique fortement alcaline est utilisée comme substance auxiliaire pour raccourcir la longueur de chaîne des molécules de kératine.

8. Procédé selon la revendication 7, où la substance inorganique fortement alcaline est utilisée en une quantité de 0,2-10 % en masse par rapport au produit naturel solide contenant de la kératine.

9. Procédé selon les revendications 1-3, où un acide inorganique fort est utilisé comme substance auxiliaire pour raccourcir la longueur de chaîne des molécules de kératine.

10. Procédé selon la revendication 9, où l'acide inorganique fort est utilisé en une quantité de 0,5-10 % en masse par rapport au produit naturel solide contenant de la kératine.

11. Procédé de fabrication d'un matériau thermoplastique biodégradable où un produit naturel solide contenant de la kératine est plastifié, sans séparation de la kératine, en présence d'un milieu formant une phase liquide dans les conditions de traitement choisies, à une température de 120-150°C et à pression élevée sous l'action de forces de cisaillement, et le matériau thermoplastique ainsi obtenu est récupéré, le produit naturel solide contenant de la kératine étant formé par des plumes, des poils, de la laine, des ongles, des griffes, des sabots, des cornes et/ou des becs, la phase liquide étant constituée par une ou plusieurs substances qui favorisent la plastification et qui sont liquides dans les conditions de traitement dans lesquelles la plastification est réalisée, et la teneur en eau effective étant d'au plus 60 % en masse.

12. Procédé selon la revendication 11, où la teneur en eau effective est d'au plus 20 % en masse.

13. Procédé selon la revendication 11 ou 12, où la substance favorisant la plastification est choisie parmi les polyols, les polyalkylèneglycols, les polyétherglycols, les acides gras, les esters d'acides gras et l'urée.

14. Procédé selon la revendication 13, où le glycérol est utilisé comme substance favorisant la plastification.

15. Procédé selon les revendications 11-14, où la substance favorisant la plastification est utilisée en une quantité de 10-200 % en masse par rapport au produit naturel solide contenant de la kératine.

16. Procédé selon la revendication 15, où la substance favorisant la plastification est utilisée en une quantité de 20-80 % en masse par rapport au produit naturel solide contenant de la kératine.

17. Procédé selon les revendications 1-16, où le produit naturel solide contenant de la kératine est préalablement broyé par un traitement mécanique.

18. Procédé selon les revendications 1-17, où la teneur en eau effective voulue est obtenue au moins en partie par séchage, retrait de l'eau avant la zone de début de plastification et/ou au moyen d'agents liant l'eau.

19. Procédé selon les revendications 1-18, où la plastification est réalisée sous une pression de 10-150 bars.

20. Procédé selon la revendication 19, où la plastification est réalisée sous une pression de 80-120 bars.

21. Procédé selon les revendications 1-20, où la plastification est réalisée dans une extrudeuse sous forme d'un processus en une étape.

22. Matériau thermoplastique biodégradable pouvant être obtenu par un procédé selon l'une quelconque des revendications précédentes.

23. Article fabriqué en un matériau selon la revendication 22.
